# EUROPÄISCHE PATENTSCHRIFT

(11) **EP 2 898 021 B1**
(45) Veröffentlichungstag und Bekanntmachung des Hinweises auf die Patenterteilung: **01.02.2017**
(21) Anmeldenummer: 13753812.0
(22) Anmeldetag: 20.08.2013
(51) Int. Cl.: C09B 67/20, C09D 17/00, C09B 67/46

(54) **DERIVATE DER SULFOBERNSTEINSÄURE ALS DISPERGIERMITTEL IN WÄSSRIGEN BINDEMITTELFREIEN PIGMENTPRÄPARATIONEN**
DERIVATIVES OF SULPHOSUCCINIC ACID AS A DISPERSING AGENT IN AQUEOUS BINDER-FREE PIGMENT PREPARATIONS
DÉRIVÉS DE L'ACIDE SULFOSUCCINIQUE SERVANT D'AGENT DE DISPERSION DANS DES PRÉPARATIONS DE PIGMENTS EXEMPTES DE LIANTS

(30) Priorität: 19.09.2012 DE 102012018544
(43) Veröffentlichungstag der Anmeldung: 29.07.2015
(73) Patentinhaber: Clariant International Ltd, 4132 Muttenz (CH)
(72) Erfinder: AHRENS, Hendrik, 65830 Kriftel (DE)
(74) Vertreter: Mikulecky, Klaus
(86) Internationale Anmeldenummer: PCT/EP2013/002503
(87) Internationale Veröffentlichungsnummer: WO 2014/044345

(56) Entgegenhaltungen:
- EP-A2- 0 403 718
- EP-A2- 0 526 068
- EP-A2- 0 582 928
- WO-A1-2004/044035
- WO-A1-2014/000842
- DE-A1-102004 051 455
- DE-A1-102006 002 800
- US-A- 4 169 737

## Beschreibung

Gegenstand der vorliegenden Erfindung sind wässrige, bindemittelfreie Pigmentpräparationen, die Derivate der Sulfobernsteinsäure als Dispergiermittel enthalten, sowie ihre Verwendung zum Färben von makromolekularen Materialien aller Art, wie beispielsweise Fasermaterialien, Papiermassefärbung, Beschichtungsstoffe, Lacke, Farben und ihre Verwendung zum Bedrucken von zweidimensionalen Flächengebilden wie beispielsweise Papier, Kartonagen, Kunststoff, Textilien und Leder.

Für das Einfärben von makromolekularen Materialien, insbesondere von Farben und Lacken werden wässrige, bindemittelfreie Pigmentpräparationen mit organischen oder anorganischen Pigmenten hergestellt. Diese Pigmentpräparationen kommen als Abtönpasten in Baumärkten und Malerfachgeschäften zum Einsatz und werden mit Hilfe von Dosier- und Abtönanlagen wässrigen und lösemittelhaltigen Farben und Lacken zugesetzt, um Kundenwünschen entsprechende Farbtöne einzustellen. Üblicherweise enthalten Abtönpasten Pigmentkonzentrationen in einem breiten Konzentrationsbereich von 1 bis 75 Massen-%.

Obwohl nach dem Stand der Technik eine Vielzahl von Verbindungen als geeignete Netz- und Dispergiermittel vorgeschlagen werden, fehlt es in der Praxis immer wieder an effektiven Dispergiermitteln für Pigmentdispersionen, die den Anforderungen an Sedimentationsstabilität, rheologisches Verhalten, Farbausbeute der Pigmente und an ein geringes human- und ökotoxikologisches Verhalten genügen. Darüber hinaus schränken Vergaberichtlinien für Umweltsiegel die Verwendung bekannter Netz- und Dispergierhilfsmittel ein, so dass der Fachmann immer wieder auf der Suche nach neuen Dispergiermitteln und Kombinationen ist, um flüssige, stabile, wässrige Pigmentpräparationen herzustellen.

US-4169737 lehrt eine intrachromospheruloide oder intraleucospheruloide Pigmentzusammensetzung und ein Verfahren zur Herstellung derselben, die im Wesentlichen aus
(a) Spheruloiden von im Wesentlichen transparenten organischem Polymermaterial, vorzugsweise vernetzt mit im wesentlichen Unlöslichkeit in jedem physikalischen Lösungsmittel, mit primären Partikeln aus einer durchschnittlichen Größe von höchstens 4 Mikrometer im Durchmesser, worin teilchenförmige organische Farbpigmentzusammensetzung eingebettet sind, bestehend im Wesentlichen aus organischen Farbpigmentmaterial mit Primärteilchen einer mittleren Größe von nicht mehr als 0,2 Mikrometer im Durchmesser, und
(b) Spheruloiden von im Wesentlichen transparenten organischem Polymermaterial, vorzugsweise vernetzt mit im wesentlichen Unlöslichkeit in jedem physikalischen Lösungsmittel, mit primären Partikeln aus einer durchschnittlichen Größe von höchstens 4 Mikrometer im Durchmesser, die im Wesentlichen aus anorganischen weißen und / oder transparenten weißen Pigmentmaterial besteht, worin teilchenförmige Leucopigment Zusammensetzungen eingebettet sind, die einen anderen Brechungsindex aufweist, und Primärpartikel von nicht mehr als 0,2 Mikrometer im Durchmesser umfassen.

DE-A-102004051455 lehrt eine wässrige Pigmentpräparation, enthaltend
(A) mindestens ein organisches und/oder anorganisches Pigment,
(B) mindestens einen wasserlöslichen oder wasserdispergierbaren nichtionischen Oligo- oder Polyester, der erhältlich ist durch Polykondensation von Dicarbonsäure- und Glykolkomponenten, umfassend
   I) eine oder mehrere aromatische Dicarbonsäuren, deren Ester oder Anhydride,
   II) C₂-C₈-Alkylen-diole,
   III) Poly(C₁-C₄-alkylen)glykole und/oder Methylpoly(C₂-C₄-alkylen)glykole,
   IV) gegebenenfalls wasserlösliche Anlagerungsprodukte von Alkylenoxid an C₁-C₂₄-Alkohole, an C₈-C₁₈-Alkylphenole oder an C₈-C₂₄-Alkylamine und
   VII) gegebenenfalls ein oder mehrere Polyole,
(C) gegebenenfalls weitere zur Herstellung wässriger Pigmentdispersionen übliche Dispergiermittel und Tenside,
(D) gegebenenfalls weitere zur Herstellung wässriger Pigmentdispersionen übliche Zusatzstoffe und
(E) Wasser.

Der vorliegenden Erfindung lag die Aufgabe zugrunde, stabile und fließfähige,

Alkylphenol-freie wässrige Pigmentpräparationen herzustellen, die über einen längeren Zeitraum keine Sedimentation der verwendeten Pigmente aufzeigen, und mit denen sich wässrige und lösemittelhaltige Farben, Lacke und Lasuren gleichermaßen einfärben lassen. Beim Abtönen von wässrigen Lacken und Farben, insbesondere Dispersionsfarben, Silikatdispersionsfarben und wässrigen Silikonharzfarben sollten die erfindungsgemäßen Pigmentpräparationen keine Rubout-Probleme zeigen.

Weiterhin sollen die wässrigen Pigmentpräparationen auch mit lösemittelhaltigen Lacken kompatible sein, sich homogen durch Mischen, Rühren oder Schütteln im Lack verteilen lassen und bei Streiche oder Rolle auf Oberflächen ein ruhiges, gleichmäßiges Farbbild ergeben. Auch für die Kompatibilität der wässrigen Pigmentpräparationen dient der Rubout-Test, der in der in US-3840383 beschriebenen Weise durchgeführt wird.

Eine weitere Aufgabe der Erfindung war es, wässrige Pigmentpräparationen mit geringem humantoxikologischen Potenzial und geringer Umweltgefährdung bereit zu stellen. Leicht flüchtige organische Verbindungen mit einem Siedepunkt von < 250 °C (VOC Gehalte) sollen den wässrigen Pigmentpräparationen nicht explizit zugesetzt werden und nur in geringen Mengen in Form von nicht umgesetzten Syntheserohstoffe oder als Nebenreaktionsprodukten enthalten sein.

Überraschenderweise wurde gefunden, dass Pigmentpräparationen, die Sulfobernsteinsäurederivate der Formel (I) in Kombination mit nichtionischen Tensiden enthalten, diese Aufgabe erfüllen.

Gegenstand der Erfindung sind daher wässrige, bindemittelfreie Pigmentpräparationen, enthaltend
(A) 1,0 bis 75,0 Gew.-% mindestens eines organischen oder anorganischen Weiß- oder Buntpigmentes oder eine Mischung verschiedener organischer und anorganischer Weiß- oder Buntpigmente,
(B) 0,01 bis 8,0 Gew.-% mindestens einer Verbindung der Formel (I), 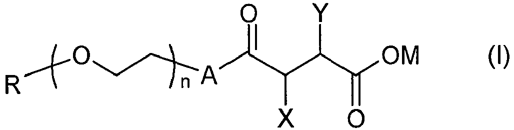 worin
   - R: ein gesättigter oder ungesättigter, linearer oder verzweigter, aliphatischer oder alizyklischer Kohlenwasserstoffrest mit 6 bis 18 Kohlenstoffatomen,
   - n: eine ganze Zahl von 0 bis 10,
   - A: ein Sauerstoffatom oder eine bifunktionelle Gruppe der Formel (II), 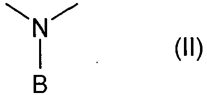
   - B: ein Wasserstoffatom oder eine Gruppe der Formel (III) ist, 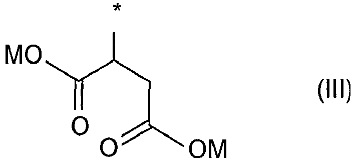 deren Bindung über die mit * gekennzeichnete Valenz erfolgt,
   - X und Y: aus Sulfonsäuregruppen in saurer Form oder deren Natrium-, Kalium- und Ammoniumsalz und Wasserstoffatomen ausgewählt sind, wobei wenn X eine Sulfonsäuregruppe oder deren Salz darstellt, Y ein Wasserstoffatom ist und umgekehrt wenn X ein Wasserstoffatom darstellt, Y eine Sulfonsäuregruppe oder deren Salz ist und
   - M: ein Wasserstoffatom oder ein Natrium-, Kalium- oder Ammoniumion darstellt,
   und wenn B eine funktionelle Gruppe der Formel (III) ist, n für 0 und M für ein Natriumatom stehen,
(C) 0,01 bis 12.0 Gew.-% eines nichtionischen Tensides, welches ein Fettsäureethanolamidethoxylat der Formel (VII), 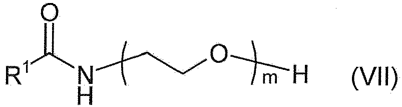 ist, worin m für eine ganze Zahl von 3 bis 50, und R¹ für C₇- bis C₂₁-Alkyl oder -Alkenyl stehen,
(G) Wasser.

Die erfindungsgemäße Pigmentpräparation kann darüber hinaus gegebenenfalls einen oder mehrere der Bestandteile
(D) 0 - 8,0 % Tonmineralverdicker auf Basis von natürlichen oder alkalisch aktivierten Montmorrilonit-Schichtsilikatmineralien,
(E) 0 - 20,0 % anorganische Füllstoffe und
(F) 0 bis 30 Gew.-% weitere, für die Herstellung von wässrigen Pigmentpräparationen übliche Hilfsmittel wie zusätzliche Netzmittel, Feuchthaltemittel, Lösemittel, Entschäumer, Rheologieadditive, Konservierungsmittel, Puffersubstanzen und pH-Regulatoren enthalten.

Die erfindungsgemäßen Pigmentpräparationen sind scherbeständig, eintrockenbeständig, lagerbeständig, schäumen bei der Applikation nicht oder nur wenig und verfügen über eine hervorragende Rheologie.

Die Komponente (A) der erfindungsgemäßen Pigmentpräparationen ist vorzugsweise ein feinteiliges, organisches oder anorganisches Weiß- oder Buntpigment oder ein Gemisch verschiedener Pigmente.

Als beispielhafte Auswahl besonders bevorzugter organischer Pigmente sind dabei Rußpigmente, wie z. B. Gas- oder Furnaceruße; Monoazo- und Disazopigmente, insbesondere die Color Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 254, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61 zu nennen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Color Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Die Komponente (B) der erfindungsgemäßen Pigmentpräparationen ist ein Derivat der Sulfobernsteinsäure. (B) ist in einer Ausführungsform ein Sulfobernsteinsäurehalbester der Formel (IV), 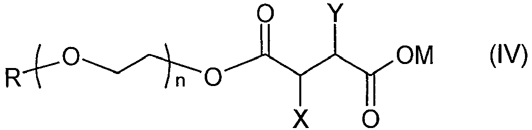 worin
- R: ein gesättigter oder ungesättigter, linearer oder verzweigter, aliphatischer oder alizyklischer Kohlenwasserstoffrest mit 6 bis 18 Kohlenstoffatomen,
- n: eine ganze Zahl von 0 bis 10,
- X und Y: eine Sulfonsäuregruppe -SO₃M darstellt, wobei wenn X eine Sulfonsäuregruppe darstellt, Y ein Wasserstoffatom ist und umgekehrt wenn X ein Wasserstoffatom darstellt, Y eine Sulfonsäuregruppe ist, und
- M: ein Wasserstoffatom oder ein Natrium-, Kalium- oder Ammoniumion darstellt,

(B) ist in einer anderen Ausführungsform ein Alkylsulfosuccinamat der Formel (V), 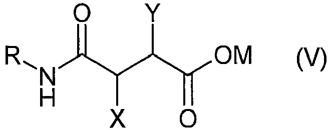 worin
R ein gesättigter oder ungesättigter, linearer oder verzweigter, aliphatischer Kohlenwasserstoffrest mit 6 bis 18 Kohlenstoffatomen,
X und Y eine Sulfonsäuregruppe -SO₃M darstellt, wobei wenn X eine Sulfonsäuregruppe darstellt, Y ein Wasserstoffatom ist und umgekehrt wenn X ein Wasserstoffatom darstellt, Y eine Sulfonsäuregruppe ist, und
M ein Wasserstoffatom oder ein Natrium-, Kalium- oder Ammoniumion darstellt.

In einer besonderen Ausführungsform stellt das Derivat der Sulfobernsteinsäure ein Amid der Formel (VI) dar, 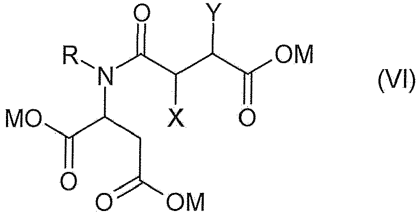 worin
R ein gesättigter oder ungesättigter, linearer oder verzweigter, aliphatischer Kohlenwasserstoffrest mit 6 bis 18 Kohlenstoffatomen,
X und Y eine Sulfonsäuregruppe -SO₃M darstellt, wobei wenn X eine Sulfonsäuregruppe darstellt, Y ein Wasserstoffatom ist und umgekehrt wenn X ein Wasserstoffatom darstellt, Y eine Sulfonsäuregruppe und
M ein Wasserstoffatom oder ein Natrium-, Kalium- oder Ammoniumion darstellt.

Die Komponente (C) der erfindungsgemäßen Pigmentpräparationen sind ethoxylierte Fettsäureethanolamide (Formel VII).

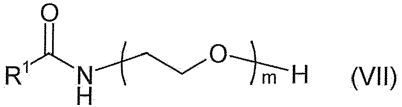

Ethoxylierte Fettsäureethanolamide werden vorzugsweise durch Umsetzen von Fettsäuren mit Ethanolamin zum Fettsäureethanolamid und anschließender Anlagerung von Ethylenoxid mittels alkalischer Katalysatoren wie Natrium- oder Kaliummethylat hergestellt. R¹ ist vorzugsweise eine Alkyl- oder Alkenylgruppe mit 11 bis 19 Kohlenstoffatomen, wobei auch mehr als eine Doppelbindung enthalten sein kann. m ist eine Zahl von 1 bis 50, vorzugsweise 1 bis 30 und vorzugsweise mindestens gleich 2, insbesondere mindestens gleich 3. Ausgehend vom Fettsäureethanolamid wird Ethylenoxid vorzugsweise an die endständige Hydroxylgruppe addiert. Die Addition von Ethylenoxid an den Stickstoff der Säureamidgruppe erfolgt untergeordnet in einer Nebenreaktion, so dass am Stickstoff untergeordnet auch 2 Polyethylenglykoletherreste gebunden sind. Geeignete Fettsäuren für die Herstellung der Fettsäureethanolamide sind Caprinsäure, Laurinsäure, Myristinsäure, Palmitinsäuren, Margarinsäure, Stearinsäure, Arachinsäure, Behensäure, Palimtoelinsäure, Ölsäure und natürlich vorkommende Mischungen wie Palmkernölfettsäure, Rapsölfettsäure, Sonnenblumenölfettsäure, Sojaölfettsäure oder Harzsäuren wie Tallölfettsäure. Die als Rohstoff verwendeten Fettsäuren können gesättigt und ungesättigt vorliegen.

Die Komponente (D) ist ein Tonmineralverdicker auf Basis von natürlichen oder alkalisch aktivierten Montmorrilonit-Schichtsilikatmineralien. Montmorrilonit ist der wesentliche Bestandteil von Bentonit und besitzt ein hohes Ionenaustauschvermögen. Bei Zugabe von Wasser dehnt sich das Mineral um ein vielfaches der Ursprungsgröße aus, wodurch die sich die Viskosität der wässrigen Dispersion erhöht. Montmorrilonit als Tonmineralverdicker kann der erfindungsgemäßen Pigmentpräparation zugesetzt werden, um das Absetzen von organischen und anorganischen Pigmenten und Füllstoffe und die Synerese, das heißt die Bildung einer zweiten Phase mit unterschiedlicher Zusammensetzung zu verlangsamen oder zu verhindern.

Die Komponente (E) ist ein anorganischer Füllstoff, der den erfindungsgemäßen Pigmentpräparationen zugesetzt werden kann, um die Dichte zu erhöhen und das Fließverhalten zu verändern. Bei volumetrischer Dosierung und geringer Pigmentkonzentration oder leichten organischen Pigmenten kann es möglich sein, dass sich die Pigmentpräparation in den Dosiergeräten nur schlecht dosieren lässt, weil die Gravitationskraft nicht ausreicht, um die flüssige Pigmentpräparation in das Farbengebinde zu entleeren. In anderen Fällen ist die Viskosität der Pigmentpräparationen bei niedrigen Pigmentkonzentrationen zu niedrig, was zu einem Nachtropfen führt. In beiden Fällen können den erfindungsgemäßen Pigmentpräparationen farblose anorganische Füllstoffe zugesetzt werden, um die Dichte der Pigmentpräparation zu erhöhen und das Fließverhalten zu verbessern. Geeignete Füllstoffe sind Calciumcarbonate wie natürlich vorkommende Kreide und gefälltes Calciumcarbonat, Dolomit, natürliches Siliciumdioxid (Quarzmehl), pyrrogene und gefällte Kieselsäuren, Kieselgur, Aluminiumoxide, Aluminiumhydroxide, Talkum, Kaolin, Glimmer (Kalium-Aluminium-Silikat-Hydrat), Bariumsulfate wie natürlich vorkommendes Schwerspate und gefälltes Blanc Fix.

Die Komponenten (F) sind weitere für die Herstellung von wässrigen Pigmentpräparationen übliche Hilfsmittel wie zusätzliche Netzmittel, Feuchthaltemittel, Lösemittel, Entschäumer, Rheologieadditive, Konservierungsmittel, Puffersubstanzen und pH-Regulatoren.

Zusätzliche Netzmittel können Netzmittel auf Basis von Polysiloxanethern sein, beispielsweise ein Methoxypolyethoxypropyltrisiloxan, Alkindiolethoxylate und Fluortenside.

Geeignete Feuchthaltemittel und Lösemittel sind vorzugsweise Glykolether, worunter hier Verbindungen mit Ethoxy- und/oder Propoxygruppen verstanden werden, welche mittlere Molmassen zwischen 200 und 20.000 g/mol aufweisen, insbesondere Polyethylenglykolether oder Polypropylenglykolether mit einer mittleren Molmasse zwischen 200 und 20.000 g/mol, Mono-, Di- oder Triethylenglykol, Mono-, Di- oder Tripropylenglykol, Methy-, Ethyl- Propyl-, Butyl-oder höherwertige Alkylpolyalkylenglykolether mit 1, 2, 3 oder mehreren Ethylenglykol- oder Propylenglykoleinheiten wie beispielsweise Methoxypropanol, Dipropylenglykolmonomethylether, Tripropylenglykolmonomethylether, Ethylenglykolmonobutylether, Diethylenglykolmonobutylether, Butylpolyethylenglykolether, Propylpolyethylenglykolether, Ethylpolyethylenglykolether, Methylpolyethylenglykolether, Dimethylpolyethylenglykolether, Dimethylpolypropylenglykolether, Glycerinethoxylate mit einem Molekulargewicht von 200 bis 20.000 g/mol, Pentaerythritolalkoxylate mit einem Molekulargewicht von 200 bis 20.000 g/mol, oder weitere Ethoxylierungs- und Alkoxylierungsprodukte und statistische oder Blockcopolymere die durch Addition von Ethylenoxid und/oder Propylenoxide an ein- und höherwertige Alkohole hergestellt wurden, mit einem Molekulargewicht von 200 bis 20.000 g/mol.

Angaben zu Molekulargewichten von Polymeren beziehen sich stets auf deren zahlenmittleres Molekulargewicht, sofern im Einzelfall nicht anders angegeben. Molekulargewichte sind per GPC gegen Polyethylenglykol als Standard zu bestimmen.

Weitere geeignete Hilfsstoffe der erfindungsgemäßen wässrigen Pigmentpräparationen sind vorzugsweise wasserlösliche organische oder hydrotrope Substanzen, die gegebenenfalls auch als Lösungsmittel dienen. Besonders geeignet sind beispielsweise Formamid, Harnstoff, Tetramethylharnstoff, ε-Caprolactam, Glycerin, Diglycerin, Polyglycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium-Benzoat, Natrium-Salicylat, Natrium-Butylmonoglykolsulfat.

Geeignete Entschäumer sind vorzugsweise Mineralölentschäumer und deren Emulsionen, Siliconölentschäumer und Siliconölemulsionen, Polyalkylenglykole, Polyalkylenglykolfettsäureester, Fettsäuren, höherwertige Alkohole, Phosphorsäureester, hydrophob modifizierte Silika, Aluminiumtristearat, Polyethylenwachse und Amidwachse.

Geeignete weitere Rheologieadditive als Mittel zur Regulierung der Viskosität sind z. B. Stärke- und Cellulosederivate und hydrophobmodifizierte ethoxylierte Urethane (HEUR)-Verdicker, alkaliquellbare Acrylatverdicker, hydrophob modifizierte Acrylatverdicker, Polymere der Acrylamidomethylpropansulfonsäure oder pyrogene Kieselsäure.

Topfkonservierer werden zur Stabilisierung der wässrigen Pigmentpräparationen und zur Verhinderung der unkontrollierten Vermehrung von Bakterien, Algen und Pilzen zugesetzt. Geeignete Biozide sind Formaldehyd, formaldehydabspaltende Komponenten, Methylisothiazolinon, Chlormethylisothiazolinon, Benzisothiazolinon, Bronopol, Dibromodicyanonbutan und silberchloridbeschichtetes Titandioxid.

Als Puffersubstanzen und pH-Regulatoren kommen vorzugsweise organische oder anorganische Basen und Säuren zum Einsatz. Bevorzugte organische Basen sind Amine, wie z. B. Ethanolamin, Diethanolamin, Triethanolamin, N,N-Dimethylethanolamin, Diisopropylamin, 2-Amino-2-methyl-1-propanol oder Dimethylaminomethylpropanol. Bevorzugte anorganische Basen sind Natrium-, Kalium-, Lithiumhydroxid oder Ammoniak.

Zur Herstellung der erfindungsgemäßen, wässrigen Pigmentpräparationen benutztes Wasser, Komponente (G), wird vorzugsweise in Form von destilliertem oder entsalztem Wasser eingesetzt. Auch Trinkwasser (Leitungswasser) und/oder Wasser natürlichen Ursprungs kann eingesetzt werden. Wasser ist in der erfindungsgemäßen wässrigen Pigmentpräparation vorzugsweise zu 10 bis 75 Gew.-%, insbesondere ad 100 Gew.-% enthalten.

Die erfindungsgemäßen wässrigen Pigmentpräparationen weisen vorzugsweise eine Viskosität von 10 bis 10.000 mPas, bevorzugt 30 bis 5.000 mPas und besonders bevorzugt 50 bis 3.000 mPas auf, gemessen mit einem Kegel-Platte-Viskosimeter bei einer Scherrate von 1/60 sec⁻¹, z. B. einem Haake Viscometer 550 gemessen.

Die erfindungsgemäßen, wässrigen Pigmentpräparationen sind in jedem Verhältnis mit Wasser mischbar, wobei sich auch mehrere unterschiedliche Präparationen mit Wasser mischen lassen. Sie zeichnen sich gegenüber herkömmlichen Pigmentpräparationen durch eine hervorragende Lagerstabilität und gute rheologische Eigenschaften aus.

Gegenstand der vorliegenden Erfindung ist auch ein Verfahren zur Herstellung der erfindungsgemäßen Pigmentpräparationen, indem man die Komponente (A) in Form von Pulver oder Granulat in Gegenwart von Wasser (G) sowie der Komponenten (B), (C) und gegebenenfalls (D), (E) und (F) in an sich üblicher Weise dispergiert, anschließend gegebenenfalls weiteres Wasser (G) zumischt und die erhaltende wässrige Pigmentdispersion mit Wasser auf die gewünschte Konzentration einstellt. Vorzugsweise werden die flüssigen Komponenten (B), (C), (G) und gegebenenfalls (F) vermischt und homogenisiert, dann die festen, pulverförmigen, granulierten oder schuppenförmigen Komponente (A), (D) und (E) und in die vorgelegte Mischung eingerührt, wobei das Pigment und gegebenenfalls die Füllstoffe angeteigt und vordispergiert werden. Je nach Kornhärte der eingesetzten Pigmente wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt bis zur gewünschten Teilchengrößenverteilung und kann bei Temperaturen im Bereich von 0 bis 100 °C erfolgen, zweckmäßig bei einer Temperatur zwischen 10 und 70 °C, vorzugsweise bei 20 bis 60 °C. Im Anschluss an die Feindispergierung kann die Pigmentpräparation mit Wasser, vorzugsweise entionisiertem oder destilliertem Wasser, weiter verdünnt werden.

Die erfindungsgemäßen Pigmentpräparationen eignen sich zum Pigmentieren und Färben von makromolekularen Materialien aller Art. Besonders eignen sich die erfindungsgemäßen Pigmentpräparation zur Pigmentierung bzw. Herstellung von Anstrich- und Dispersionsfarben, Dispersionslacken, Druckfarben, hierbei beispielsweise Textildruck-, Flexodruck-, Dekordruck- oder Tiefdruckfarben, Tapetenfarben, wasserverdünnbaren Lacken, Holzbeizen, Holzschutzsystemen und Lacken zur Oberflächenbeschichtung von Gegenständen aus beispielsweise Metall, Holz, Kunststoff, Glas, Keramik, Beton, Textilmaterial, Papier oder Kautschuk zur Anwendung kommen.

Eine besondere Eigenschaft der erfindungsgemäßen Pigmentpräparationen ist ihre Verwendung als universale Abtönpasten. Universale Abtönpasten eignen sich sowohl zum Einfärben von wässrigen Farben als auch zum Abtönen von lösemittelhaltigen Lacken. Übliche Dispergiermittel für wässrige Pigmentpräparationen stabilisieren die Pigmente nur in wässrigen, nicht aber in lösemittelhaltigen Systemen. Werden wässrige Pigmentpräparationen zum Einfärben von lösemittelhaltigen Lacken verwendet, kann es zur Agglomeration der Pigmente kommen und zum Aufschwimmen der agglomerierten Pigmente im Lack kommen. Beim Auftragen der Lacke mit Pinsel, Rollen oder durch Sprühapplikation kann es zu Streifigkeit und zu einem unruhigen Farbbild aufgrund von Farbtonunterschieden kommen, weil die Pigmente in der Farbe und während des Trocknungsprozesses flokkulieren, so dass die Farbstärke reduziert wird. Beim Auftrag der eingefärbten Lacke werden die Pigmentagglomerate wieder aufgetrennt, aber unterschiedlich stark, so dass es zu den beobachteten Farbtonunterschieden kommt. Im Labor wird dieses Phänomen im Rubout-Test simuliert, welcher in US-3840383 beschrieben wird.

### Beispiele

### Herstellung einer Pigmentpräparation

Das Pigment wird, entweder als Pulver, Granulat oder als Presskuchen, zusammen mit den Dispergiermitteln und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert.
Zur Dispergierung werden die flüssigen Komponenten (B), (C) und (F) in einem Mahlbehälter vorgelegt und vermischt werden. Anschließend wird die pulverförmigen Komponenten (A) und gegebenenfalls (D) und (E) zugegeben und mit dem Dissolver vordispergiert.

Die anschließende Feindispergierung erfolgt mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgt. Anschließend wird die gewünschte Pigmentendkonzentration mit entionisiertem Wasser eingestellt, die Mahlkörper abgetrennt und die Pigmentpräparation isoliert.

Prüfung der Lackkompatibilität und der Farbstärke

Die Pigmentpräparation wird eine Woche bei 60 °C gelagert und visuell beurteilt. Die Viskosität der Pigmentpräparation wird bei 25 °C mit einem Haake Viscometer 550 bei einer Scherrate von 1/60 sec⁻¹ oder bei gut fließfähigen Pigmentpräparationen mit einem Brookfield-Viscometer, Model DV-II mit der Spindel 3 bei 100 UpM gemessen. Zur Bestimmung der Farbstärke und der Kompatibilität werden die Pigmentpräparationen jeweils einer wässrigen Dispersionsweißfarbe und einem mineralölhaltigen Langöl-Alkydlack zugesetzt. Für das Ausprüfen der Farbstärke und Kompatibilität werden je 200 g der abgetönten Farben bestehend aus 92 Gew.-% Grundlack und 8 Gew.-% der Pigmentpräparation in eine Blechdose geben und 60 Sekunden in einem Inkshaker 500 der Fa. Olbrich Know-how, Hemer homogenisiert. Die abgetönten Farben werden nach einem Tag auf einem Prüfkarton mit einer 120 µm Rakel auf einem Filmziehgerät, Modell 509 MC der Fa. Erichsen GmbH, Hemer ausgestrichen. An den trocknenden Farbfilmen wird der Rubout-Test wie in der Schrift US-3840383 beschriebenen Weise durchgeführt.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. In vorliegender Anmeldung bedeuten "Teile" Gewichtsteile und Prozentangaben Gewichtsprozente, soweit im Einzelfall nichts anders angegeben ist.

### Beispiel 1 (Vergleichsbeispiel)

| | |
|---|---|
| 60,0 Teile | C.I. Pigment Yellow 42 (Bayferrox Yellow 3920, Fa. Lanxess, Komponente (A)), |
| 4,0 Teile | einer 38%igen Dispersion eines |
| | Natiumtalgfettalkylsulfosuccinamates (Emulsogen^{®} TAS, Fa. Clariant, Komponente (B) analog zu Formel (V)), |
| 5,0 Teile | Oleylethoxylat umgesetzt mit 8 Mol Ethylenoxid (Genapol^{®} O 080, Fa. Clariant, Komponente (C)), |
| 6,0 Teile | Polyethyenglykol mit einem Molekulargewicht von 200 g/mol (Polyglykol 200 USP, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 24,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 1,8 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C bleibt die Pigmentpräparation homogen und für die Verwendung als Abtönpaste geeignet.

### Beispiel 2 (Vergleichsbeispiel)

| | |
|---|---|
| 60,0 Teile | C.I. Pigment Yellow 42 (Bayferrox Yellow 3920, Fa. Lanxess, Komponente (A)), |
| 2,0 Teile | Oleylethoxylat mit 8 Mol Ethylenoxid (Genapol^{®} O 080, Fa. Clariant, Komponente (C)), |
| 1,5 Teile | einer 40%igen Ammoniumpolyacrylat-Lösung (Komponente (F)), |
| 6,0 Teile | Polyethyenglykol mit einem Molekulargewicht von 200 g/mol (Polyglykol 200 USP, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 32,0 Teile | Wasser (Komponente (G)) |

Die Pigmentpräparation ist nach der Mahlung eine flüssige, viskose Pigmentdispersion. Die Pigmentpräparation wird nach einwöchiger Lagerung bei 60 °C fest und stark thixotrop. Durch Rühren verflüssigt sich die Paste wieder und hat eine Viskosität der Pigmentpräparation von 3,80 Pa·s, gemessen mit einem Haake Kegel-Platte-Viskosimeter. Durch wiederholte Lagerung dickt die Pigmentpräparation wieder ein. Die mit der Pigmentpaste abgetönte Dispersionsweißfarbe zeigt keinen Rubout, wohingegen der mit der Pigmentpaste abgetönte Langöl-Alkydlack einen starken Rubout zeigt.

### Beispiel 3 (Vergleichsbeispiel)

| | |
|---|---|
| 65,0 Teile | C.I. Pigment Yellow 42 (Bayferrox Yellow 3920, Fa. Lanxess, Komponente (A)), |
| 8,0 Teile | Oleylethoxylat mit 8 Mol Ethylenoxid (Genapol^{®} O 080, Fa. Clariant; Komponente (C)), |
| 6,0 Teile | einer 30%igen Lösung eines Talgfettalkylammoniumacetates (Komponente (F)), |
| 10,0 Teile | Polyethyenglykol mit einem Molekulargewicht von 200 g/mol (Polyglykol 200 USP, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 10,5 Teile | Wasser (Komponente (G)) |

Die Pigmentpräparation ist nach der Mahlung eine flüssige, viskose Pigmentdispersion. Die Pigmentpräparation ist nach einwöchiger Lagerung bei 60 °C fest. Die Viskosität lässt sich nicht bestimmen und die Pigmentpräparation ist ungeeignet für das flüssige Dosieren als Abtönpaste.

### Beispiel 4 (Vergleichsbeispiel)

| | |
|---|---|
| 65,0 Teile | C.I. Pigment Yellow 42 (Bayferrox Yellow 3920, Fa. Lanxess, Komponente (A)), |
| 8,0 Teile | Oleylethoxylat mit 8 Mol Ethylenoxid (Genapol^{®} O 080, Fa. Clariant; Komponente (C)), |
| 1,0 Teile | Tallölfettsäure (Komponente (F)), |
| 6,0 Teile | einer 30%igen Lösung eines Talgfettalkylammoniumacetates (Komponente (F)), |
| 10,0 Teile | Polyethyenglykol mit einem Molekulargewicht von 200 g/mol (Polyglykol 200 USP, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 9,5 Teile | Wasser (Komponente (G)) |

Die Pigmentpräparation ist nach der Mahlung eine flüssige, viskose Dispersion. Die Pigmentpräparation ist nach einwöchiger Lagerung bei 60 °C flüssig, viskos und die Viskosität beträgt 4,0 Pa·s gemessen mit einem Haake Kegel-Platte Viscometer bei einer Scherrate von 1/60 sec⁻¹. Die mit der Pigmentpräparation abgetönte Dispersionsweißfarbe zeigt keinen Rubout, wohingegen der mit der Pigmentpaste abgetönte Langöl-Alkydlack einen starken Rubout zeigt. Nach weiterer Lagerung über 4 Wochen bei 25°C dickt die Pigmentpräparation ein und ist danach für die Verwendung als Abtönpaste von Lacken und Farben nicht mehr geeignet.

### Beispiel 5 (Vergleichsbeispiel)

| | |
|---|---|
| 50,0 Teile | C.I. Pigment Black 11 (Bayferrox Black 316, Fa. Lanxess, Komponente (A)), |
| 7,0 Teile | einer 38%igen Dispersion eines |
| | Natiumtalgfettalkylsulfosuccinamates (Emuisogen^{®} TAS, Fa. Clariant, Komponente (B)), |
| 8,0 Teile | Oleylethoxylat umgesetzt mit 8 Mol Ethylenoxid (Genapol^{®} O 080, Fa. Clariant, Komponente (C)), |
| 10,0 Teile | Polyethyenglykol mit einem Molekulargewicht von 200 g/mol (Polyglykol 200 USP, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 24,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 2,9 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C bleibt die Pigmentpräparation homogen und für die Verwendung als Abtönpaste geeignet.

### Beispiel 6 (Vergleichsbeispiel)

| | |
|---|---|
| 62,0 Teile | C.I. Pigment Red 101 (Bayferrox Red 130, Fa. Lanxess, Komponente (A)), |
| 2,5 Teile | einer 38%igen Dispersion eines |
| | Natiumtalgfettalkylsulfosuccinamates (Emulsogen^{®} TAS, Fa. Clariant, Komponente (B)), |
| 3,5 Teile | Oleylethoxylat umgesetzt mit 8 Mol Ethylenoxid (Genapol^{®} O 080, Fa. Clariant, Komponente (C)), |
| 4,0 Teile | Polyethyenglykol mit einem Molekulargewicht von 300 g/mol (Polyglykol, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 27,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 0,92 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C bleibt die Pigmentpräparation homogen und für die Verwendung als Abtönpaste geeignet.

### Beispiel 7 (Vergleichsbeispiel)

| | |
|---|---|
| 57,0 Teile | C.I. Pigment Green 17 (Chrome Oxide Green GN, Fa. Lanxess, Komponente (A)), |
| 5,0 Teile | einer 38%igen Dispersion eines |
| | Natiumtalgfettalkylsulfosuccinamates (Emulsogen^{®} TAS, Fa. Clariant, Komponente (B)), |
| 7,0 Teile | Oleylethoxylat umgesetzt mit 8 Mol Ethylenoxid (Genapol^{®} O 080, Fa. Clariant, Komponente (C)), |
| 8,0 Teile | Polyethyenglykol mit einem Molekulargewicht von 300 g/mol (Polyglykol, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 22,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 1,02 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C ist die Pigmentpräparation in 2 Phasen getrennt, lässt sich aber durch Rühren oder Schütteln homogenisieren und ist danach für die Verwendung als Abtönpaste geeignet.

### Beispiel 8

| | |
|---|---|
| 50,0 Teile | C.I. Pigment Black 11 (Bayferrox Black 316, Fa. Lanxess, Komponente (A)), |
| 7,0 Teile | einer 38%igen Dispersion eines |
| | Natiumtalgfettalkylsulfosuccinamates (Emulsogen^{®} TAS, Fa. Clariant, Komponente (B)), |
| 8,0 Teile | Talölfettsäureethanolamid umgesetzt mit 5 Mol Ethylenoxid (Emulsogen^{®} MT 050, Fa. Clariant, Komponente (C)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 24,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 1,3 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C bleibt die Pigmentpräparation homogen und für die Verwendung als Abtönpaste geeignet.

### Beispiel 9

| | |
|---|---|
| 50,0 Teile | C.I. Pigment Black 11 (Bayferrox Black 316, Fa. Lanxess, Komponente (A)), |
| 7,0 Teile | einer 38 %igen Dispersion eines |
| | Natiumtalgfettalkylsulfosuccinamates (Emuisogen^{®} TAS, Fa. Clariant, Komponente (B)), |
| 8,0 Teile | Talölfettsäureethanolamid umgesetzt mit 10 Mol Ethylenoxid (Komponente (C)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 24,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 0,5 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C ist die Pigmentpräparation in 2 Phasen getrennt, lässt sich aber durch Rühren oder Schütteln homogenisieren und ist danach für die Verwendung als Abtönpaste geeignet.

### Beispiel 10

| | |
|---|---|
| 50,0 Teile | C.I. Pigment Black 11 (Bayferrox Black 316, Fa. Lanxess, Komponente (A)), |
| 7,0 Teile | einer 38%igen Dispersion eines |
| | Natiumtalgfettalkylsulfosuccinamates (Emulsogen^{®} TAS, Fa. Clariant, Komponente (B)), |
| 8,0 Teile | Talölfettsäureethanolamid umgesetzt mit 15 Mol Ethylenoxid (Dispersogen^{®} MT 150, Fa. Clariant, Komponente (C)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 24,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 0,22 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C ist die Pigmentpräparation in 2 Phasen getrennt, lässt sich aber durch Rühren oder Schütteln homogenisieren und ist danach für die Verwendung als Abtönpaste geeignet.

### Beispiel 11

| | |
|---|---|
| 50,0 Teile | C.I. Pigment Black 11 (Bayferrox Black 316, Fa. Lanxess, Komponente (A)), |
| 7,0 Teile | einer 38%igen Dispersion eines |
| | Natiumtalgfettalkylsulfosuccinamates (Emulsogen^{®} TAS, Fa. Clariant, Komponente (B)), |
| 8,0 Teile | Talölfettsäureethanolamid umgesetzt mit 30 Mol Ethylenoxid (Komponente (C)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 24,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 0,24 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C ist die Pigmentpräparation in 2 Phasen getrennt, lässt sich aber durch Rühren oder Schütteln homogenisieren und ist danach für die Verwendung als Abtönpaste geeignet.

### Beispiel 12

| | |
|---|---|
| 60,0 Teile | C.I. Pigment Black 11 (Bayferrox Black 316, Fa. Lanxess, Komponente (A)), |
| 7,0 Teile | einer 38%igen Dispersion eines |
| | Natiumtalgfettalkylsulfosuccinamates (Emulsogen^{®} TAS, Fa. Clariant, Komponente (B)), |
| 8,0 Teile | Talölfettsäureethanolamid umgesetzt mit 15 Mol Ethylenoxid (Dispersogen^{®} MT 150, Fa. Clariant, Komponente (C)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 14,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 1,17 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C bleibt die Pigmentpräparation homogen und für die Verwendung als Abtönpaste geeignet.

### Beispiel 13

| | |
|---|---|
| 60,0 Teile | C.I. Pigment Blue 28 (Heucodur Blue 551, Fa. Heubach, Komponente (A)), |
| 7,0 Teile | einer 38 %igen Dispersion eines |
| | Natiumtalgfettalkylsulfosuccinamates (Emulsogen^{®} TAS, Fa. Clariant, Komponente (B)), |
| 8,0 Teile | Talölfettsäureethanolamid umgesetzt mit 15 Mol Ethylenoxid (Dispersogen^{®} MT 150, Fa. Clariant, Komponente (C)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 14,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 0,64 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C ist die Pigmentpräparation in 2 Phasen getrennt, lässt sich aber durch Rühren oder Schütteln homogenisieren und ist danach für die Verwendung als Abtönpaste geeignet.

### Beispiel 14

| | |
|---|---|
| 60,0 Teile | C.I. Pigment Yellow 42 (Bayferrox Yellow 3920, Fa. Lanxess, Komponente (A)), |
| 7,0 Teile | einer 38%igen Dispersion eines |
| | Natiumtalgfettalkylsulfosuccinamates (Emulsogen^{®} TAS, Fa. Clariant, Komponente (B)), |
| 8,0 Teile | Talölfettsäureethanolamid umgesetzt mit 15 Mol Ethylenoxid (Dispersogen^{®} MT 150, Fa. Clariant, Komponente (C)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 14,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 1,19 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C bleibt die Pigmentpräparation homogen und für die Verwendung als Abtönpaste geeignet.

### Beispiel 15

| | |
|---|---|
| 60,0 Teile | C.I. Pigment Black 11 (Bayferrox Black 316, Fa. Lanxess, Komponente (A)), |
| 2,5 Teile | eines Natriumisodecylsulfobernsteinsäurehalbesters (Komponente (B) analog zu Formel (IV)), |
| 8,0 Teile | Talölfettsäureethanolamid umgesetzt mit 15 Mol Ethylenoxid (Dispersogen^{®} MT 150, Fa. Clariant, Komponente (C)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 19,0 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 0,22 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C ist die Pigmentpräparation in 2 Phasen getrennt, lässt sich aber durch Rühren oder Schütteln homogenisieren und ist danach für die Verwendung als Abtönpaste geeignet.

### Beispiel 16

| | |
|---|---|
| 50,0 Teile | C.I. Pigment Black 11 (Bayferrox Black 316, Fa. Lanxess, Komponente (A)), |
| 7,0 Teile | einer 38 %igen Lösung eines Tetranatrium N-(1,2-dicarboxyethyl)-N-octadecylsulfosuccinamates (Aerosol 22, Fa. Cytec, Komponente (B) analog zu Formel (VI)), |
| 8,0 Teile | Talölfettsäureethanolamid umgesetzt mit 5 Mol Ethylenoxid (Emulsogen^{®} MT 050, Fa. Clariant, Komponente (C)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 24,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 0,81 Pa·s, gemessen mit einem Haake Kegel-Platte-Viskosimeter. Die mit der Pigmentpaste abgetönte Dispersionsweißfarbe und der Langöl-Alkydlack zeigen keinen Rubout. Nach weiterer Lagerung über 4 Wochen bei 25°C ist die Pigmentpräparation in 2 Phasen getrennt, lässt sich aber durch Rühren oder Schütteln homogenisieren und ist danach für die Verwendung als Abtönpaste geeignet.

### Beispiel 17 (Vergleichsbeispiel)

| | |
|---|---|
| 21,0 Teile | C.I. Pigment Blue 15:3 (Hostaperm^{®} Blue B2G, Fa. Clariant, Komponente (A)), |
| 3,8 Teile | einer 38 %igen Dispersion eines |
| | Natiumtalgfettalkylsulfosuccinamates (Emulsogen^{®} TAS, Fa. Clariant, Komponente (B)), |
| 5,2 Teile | Oleylethoxylat mit 8 Mol Ethylenoxid (Genapol^{®} O 080, Fa. Clariant, Komponente (C)), |
| 3,0 Teile | Montmorrillonit-Tonmineralverdicker und Antiabsetzmittel (Ceratofix^{®} VP, Fa. Clariant, Komponente (D)), |
| 18,0 Teile | Bariumsulfat (Blanc Fix micro, Fa. Rockwood Pigments, Komponente (E)), |
| 6,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 42,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 175 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 18 (Vergleichsbeispiel)

| | |
|---|---|
| 5,0 Teile | C.I. Pigment Black 7 (Special Black 4, Fa. Evonik, Komponente (A)), |
| 3,8 Teile | einer 38 %igen Dispersion eines |
| | Natiumtalgfettalkylsulfosuccinamates (Emulsogen^{®} TAS, Fa. Clariant, Komponente (B)), |
| 5,2 Teile | Oleylethoxylat mit 8 Mol Ethylenoxid (Genapol^{®} O 080, Fa. Clariant, Komponente (C)), |
| 2,0 Teile | Montmorrillonit-Tonmineralverdicker und Antiabsetzmittel (Ceratofix^{®} VP, Fa. Clariant, Komponente (D)), |
| 26,0 Teile | Bariumsulfat (Blanc Fix micro, Fa. Rockwood Pigments, Komponente (E)), |
| 6,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 52,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 162 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 19

| | |
|---|---|
| 2,0 Teile | C.I. Pigment Violet 23 (Hostaperm^{®} Violet RL 02, Fa. Clariant, Komponente (A)), |
| 7,0 Teile | einer 38%igen Lösung eines Tetranatrium N-(1,2-dicarboxyethyl)-N-octadecyl sulfosuccinamates (Aerosol 22, Fa. Cytec, Komponente (B) analog zu Formel (VI)), |
| 6,0 Teile | Tallölfettsäureethanolamid umgesetzt mit 15 Mol Ethylenoxid (Dispersogen^{®} MT 150, Fa. Clariant, Komponente (C)), |
| 3,0 Teile | Montmorrillonit-Tonmineralverdicker und Antiabsetzmittel (Ceratofix^{®} VP, Fa. Clariant, Komponente (D)), |
| 29,0 Teile | Bariumsulfat (Blanc Fix micro, Fa. Rockwood Pigments, Komponente (E)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 42,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 82 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 20

| | |
|---|---|
| 13,0 Teile | C.I. Pigment Red 112 (Permanent^{®} Red FGR, Fa. Clariant, Komponente (A)), |
| 4,0 Teile | einer 38 %igen Dispersion eines |
| | Natiumtalgfettalkylsulfosuccinamates (Emulsogen^{®} TAS, Fa. Clariant, Komponente (B)), |
| 6,0 Teile | Tallölfettsäureethanolamid umgesetzt mit 15 Mol Ethylenoxid (Dispersogen^{®} MT 150, Fa. Clariant, Komponente (C)), |
| 3,0 Teile | Montmorrillonit-Tonmineralverdicker und Antiabsetzmittel (Ceratofix^{®} VP, Fa. Clariant, Komponente (D)), |
| 25,0 Teile | Bariumsulfat (Blanc Fix micro, Fa. Rockwood Pigments, Komponente (E)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 38,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 183 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 21 (Vergleichsbeispiel)

| | |
|---|---|
| 50,0 Teile | C.I. Pigment Black 11 (Bayferrox Black 316, Fa. Lanxess, Komponente (A)), |
| 8,0 Teile | Tallölfettsäureethanolamid umgesetzt mit 15 Mol Ethylenoxid (Dispersogen^{®} MT 150, Fa. Clariant, Komponente (C)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 31,5 Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 0,38 Pa·s, gemessen mit einem Haake Kegel-Platte-Viskosimeter bei einer Scherrate von 1/60 sec⁻¹. Die mit der Pigmentpaste abgetönte Dispersionsweißfarbe zeigt keinen Rubout, wohingegen der mit der Pigmentpaste abgetönte Langöl-Alkydlack einen starken Rubout zeigt. Nach weiterer Lagerung über 4 Wochen bei 25 °C bleibt die Pigmentpräparation homogen und für die Verwendung als Abtönpaste für wässrige Lacke geeignet.

### Beispiel 22 (Vergleichsbeispiel)

| | |
|---|---|
| 50,0 Teile | C.I. Pigment Yellow 3920 (Bayferrox Yellow 3920, Fa. Lanxess, Komponente (A)), |
| 8,0 Teile | Oleylethoxylat mit 8 Mol Ethylenoxid (Genapol^{®} O 080, Fa. Clariant, Komponente (C)), |
| 10,0 Teile | Glycerinethoxylat mit einem Molekulargewicht von 300 g/mol (Polyglykol 300, Fa. Clariant, Komponente (F)), |
| 0,3 Teile | Entschäumer (D-Foam-R C 740, Fa. Clariant, Komponente (F)), |
| 0,2 Teile | Konservierungsmittel (Nipacide^{®} BSM, Fa. Clariant, Komponente (F)), |
| 31,5 Teile | Wasser (Komponente (G)) |

Die Pigmentpräparation ist nach einwöchiger Lagerung bei 60 °C pastös und hochviskos und lässt sich nicht als Abtönpaste dosieren. Die Viskosität der Pigmentpräparation ist außerhalb des Messbereiches der üblichen Messgeräte und lässt sich nicht bestimmen.

Die vorstehenden Vergleichsbeispiele zeigen die Bedeutung der erfindungsgemäßen Kombination aus den Komponenten B und C. Pigmentpräparationen mit geeigneter Viskosität lassen sich mit der erfindungsgemäßen Kombination aus den Komponenten B und C herstellen, aber nicht mit B allein. Die erfindungsgemäßen Pigmentpräparationen, die Komponenten B und C enthalten, zeigen beim Abtönen von wässrigen und lösemittelhaltigen Lacken und Farben weitgehend eine gute Verträglichkeit und keinen Rubout.

## Patentansprüche

1. Wässrige, bindemittelfreie Pigmentpräparationen, enthaltend
(A) 1,0 bis 75,0 Gew.-% mindestens eines organischen oder anorganischen Weiß- oder Buntpigmentes oder eine Mischung verschiedener organischer und anorganischer Weiß- oder Buntpigmente,
(B) 0,01 bis 8,0 Gew.-% mindestens einer Verbindung der Formel (I), 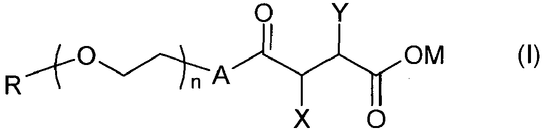 worin
R ein gesättigter oder ungesättigter, linearer oder verzweigter, aliphatischer oder alizyklischer Kohlenwasserstoffrest mit 6 bis 18 Kohlenstoffatomen,
n eine ganze Zahl von 0 bis 10,
A ein Sauerstoffatom oder eine bifunktionelle Gruppe der Formel (II), 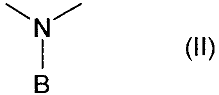
B ein Wasserstoffatom oder eine Gruppe der Formel (III) ist, 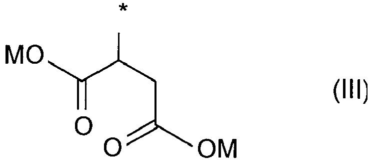 deren Bindung über die mit * gekennzeichnete Valenz erfolgt,
X und Y aus Sulfonsäuregruppen in saurer Form oder deren Natrium-, Kalium- und Ammoniumsalz und Wasserstoffatomen ausgewählt sind, wobei wenn X eine Sulfonsäuregruppe oder deren Salz darstellt, Y ein Wasserstoffatom ist und umgekehrt wenn X ein Wasserstoffatom darstellt, Y eine Sulfonsäuregruppe oder deren Salz ist und
M ein Wasserstoffatom oder ein Natrium-, Kalium- oder Ammoniumion darstellt,
und wenn B eine funktionelle Gruppe der Formel (III) ist, n für 0 und M für ein Natriumatom stehen,
(C) 0,01 bis 12,0 Gew.-% eines nichtionischen Tensides, welches ein Fettsäureethanolamidethoxylat der Formel (VII), 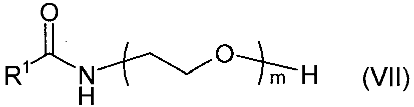 ist, worin m für eine ganze Zahl von 3 bis 50, und R¹ für C₇- bis C₂₁-Alkyl oder -Alkenyl stehen,
(G) Wasser ist.

2. Wässrige, bindemittelfreie Pigmentpräparation nach Anspruch 1, worin Komponente (B) ein Sulfobernsteinsäurehalbester der Formel (IV) ist, 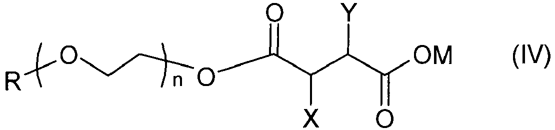 worin
R, n, X, Y und M die in Anspruch 1 angegebenen Bedeutungen haben.

3. Wässrige, bindemittelfreie Pigmentpräparation nach Anspruch 1, worin Komponente (B) ein Alkylsulfosuccinamat der Formel (V) ist, 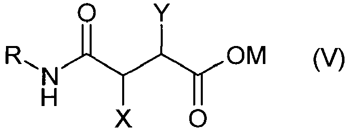 worin
R, X, Y und M die in Anspruch 1 angegebenen Bedeutungen haben.

4. Wässrige, bindemittelfreie Pigmentpräparation nach Anspruch 1, worin Komponente (B) ein Sulfobernsteinsäureamid der Formel (VI) ist, 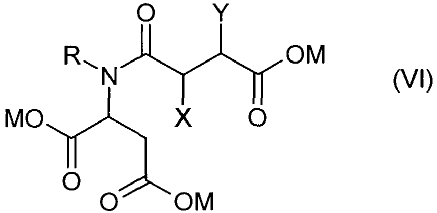 worin
R, X, Y und M die in Anspruch 1 angegebenen Bedeutungen haben.

5. Wässrige, bindemittelfreie Pigmentpräparation nach Anspruch 1, enthaltend 1 bis 12 Gew.-% eines Fettsäurealkanolamidethoxylats der Formel (VII).

6. Wässrige, bindemittelfreie Pigmentpräparation nach einem oder mehreren der Ansprüche 1 bis 5 enthaltend 1 bis 8 Gew.-% einer Verbindung der Formel (I).

7. Wässrige, bindemittelfreie Pigmentpräparation nach einem oder mehreren der Ansprüche 1 bis 6, enthaltend 10 bis 75 Gew.-% Wasser.

8. Wässrige, bindemittelfreie Pigmentpräparation nach einem oder mehreren der Ansprüche 1 bis 7, welche eine Viskosität von 10 bis 10.000 mPas, bestimmt mit einem Kegel-Platte Viskosimeter bei einer Scherrate von 1/60 sec⁻¹, aufweist.

9. Wässrige, bindemittelfreie Pigmentpräparationen nach einem oder mehreren der Ansprüche 1 bis 8, enthaltend
(D) 0 - 8,0 Gew.-% Tonmineralverdicker auf Basis von natürlichen oder alkalisch aktivierten Montmorrilonit-Schichtsilikatmineralien.

10. Wässrige, bindemittelfreie Pigmentpräparationen nach einem oder mehreren der Ansprüche 1 bis 9, enthaltend
(E) 0 - 20,0 Gew.-% anorganische Füllstoffe.

11. Wässrige, bindemittelfreie Pigmentpräparationen nach einem oder mehreren der Ansprüche 1 bis 10, enthaltend
(F) 0 bis 30 Gew.-% weitere, für die Herstellung von wässrigen, bindemittelfreien Pigmentpräparationen übliche Hilfsmittel ausgewählt aus Netzmittel, Feuchthaltemittel, Lösemittel, Entschäumer, Rheologieadditive, Konservierungsmittel, Puffersubstanzen und pH-Regulatoren.

12. Wässrige, bindemittelfreie Pigmentpräparation nach Anspruch 11, enthaltend bis zu 15 Gew.-% mindestens eines Feuchthalte- oder Lösemittels, ausgewählt aus Glykolethern mit 200 bis 20.000 g/mol zahlenmittlerem Molekulargewicht.

13. Wässrige, bindemittelfreie Pigmentpräparation nach Anspruch 11 und/oder 12, enthaltend bis zu 2 Gew.-% Entschäumer.

14. Wässrige, bindemittelfreie Pigmentpräparation nach einem oder mehreren der Ansprüche 11 bis 13, enthaltend bis zu 1 Gew.-% eines Topfkonservierungsmittels.

15. Verwendung einer wässrigen, bindemittelfreien Pigmentpräparation nach einem oder mehreren der Ansprüche 1 bis 14 zum Einfärben von makromolekularen Materialien, Beschichtungsstoffen, Lacken und Farben, und ihre Verwendung zum Bedrucken von zweidimensionalen Flächengebilden.

## Claims

1. An aqueous, binder-free pigment preparation comprising
(A) 1.0 to 75.0 wt% of at least one organic or inorganic white or chromatic pigment or a mixture of different organic and inorganic white or chromatic pigments,
(B) 0.01 to 8.0 wt% of at least one compound of the formula (I), 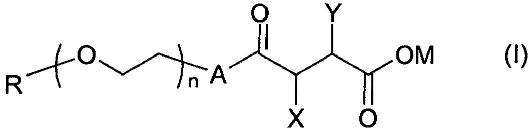 in which
R is a saturated or unsaturated, linear or branched, aliphatic or alicyclic hydrocarbon radical having 6 to 18 carbon atoms,
n is an integer from 0 to 10,
A is an oxygen atom or a difunctional group of the formula (II) 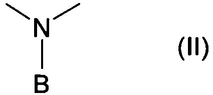
B is a hydrogen atom or a group of the formula (III), 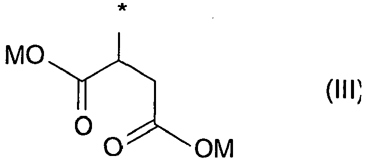 whose bonding is via the valence marked with *,
X and Y are selected from sulfonic acid groups in acidic form or their sodium, potassium, and ammonium salt and from hydrogen atoms; if X is a sulfonic acid group or salt thereof, Y is a hydrogen atom, and, conversely, if X is a hydrogen atom, Y is a sulfonic acid group or salt thereof, and
M is a hydrogen atom or a sodium, potassium, or ammonium ion,
and, if B is a functional group of the formula (III), n is 0 and M is a sodium atom,
(C) 0.01 to 12.0 wt% of a nonionic surfactant which is a fatty acid ethanolamide ethoxylate of the formula (VII), 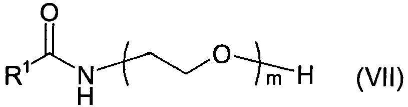 in which m is an integer from 3 to 50 and R¹ is C₇ to C₂₁ alkyl or alkenyl,
(G) is water.

2. The aqueous, binder-free pigment preparation as claimed in claim 1, wherein component (B) is a sulfosuccinic monoester of the formula (IV), 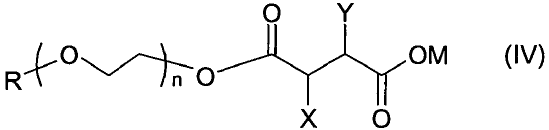 in which
R, n, X, Y, and M have the definitions indicated in claim 1.

3. The aqueous, binder-free pigment preparation as claimed in claim 1, wherein component (B) is an alkyl sulfosuccinamate of the formula (V), 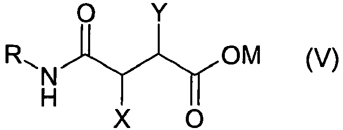 in which
R, X, Y, and M have the definitions indicated in claim 1.

4. The aqueous, binder-free pigment preparation as claimed in claim 1, wherein component (B) is a sulfosuccinamide of the formula (VI), 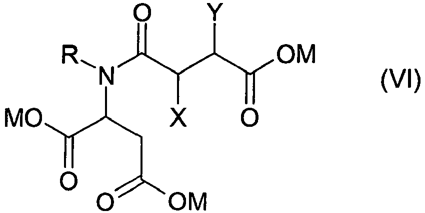 in which
R, X, Y, and M have the definitions indicated in claim 1.

5. The aqueous, binder-free pigment preparation as claimed in claim 1, containing 1 to 12 wt% of a fatty acid alkanolamide ethoxylate of the formula (VII).

6. The aqueous, binder-free pigment preparation as claimed in one or more of claims 1 to 5, containing 1 to 8 wt% of a compound of the formula (I).

7. The aqueous, binder-free pigment preparation as claimed in one or more of claims 1 to 6, containing 10 to 75 wt% of water.

8. The aqueous, binder-free pigment preparation as claimed in one or more of claims 1 to 7, having a viscosity of 10 to 10 000 mPas as determined using a cone/plate viscometer at a shear rate of 1/60 sec⁻¹.

9. The aqueous, binder-free pigment preparation as claimed in one or more of claims 1 to 8, comprising
(D) 0-8.0 wt% of clay mineral thickeners based on natural or alkali-activated montmorillonite phyllosilicate minerals.

10. The aqueous, binder-free pigment preparation as claimed in one or more of claims 1 to 9, comprising
(E) 0-20.0 wt% of inorganic fillers.

11. The aqueous, binder-free pigment preparation as claimed in one or more of claims 1 to 10, comprising
(F) 0 to 30 wt% of further auxiliaries customary for the production of aqueous, binder-free pigment preparations, selected from wetting agents, humectants, solvents, defoamers, rheological additives, preservatives, buffer substances, and pH regulators.

12. The aqueous, binder-free pigment preparation as claimed in claim 11, containing up to 15 wt% of at least one humectant or solvent selected from glycol ethers with a 200 to 20 000 g/mol number-average molecular weight.

13. The aqueous, binder-free pigment preparation as claimed in claim 11 and/or 12, containing up to 2 wt% of defoamers.

14. The aqueous, binder-free pigment preparation as claimed in one or more of claims 11 to 13, containing up to 1 wt% of an in-can preservative.

15. The use of an aqueous, binder-free pigment preparation as claimed in one or more of claims 1 to 14 for coloring macromolecular materials, coating materials, paints and inks, and the use thereof for printing two-dimensional sheetlike structures.

## Revendications

1. Préparations aqueuses pigmentaires exemptes de liant, contenant
(A) 1,0 à 75,0% en poids d'au moins un pigment blanc ou coloré, organique ou inorganique ou d'un mélange de différents pigments blancs ou colorés, organiques ou inorganiques,
(B) 0,01 à 8,0% en poids d'au moins un composé de formule (I), 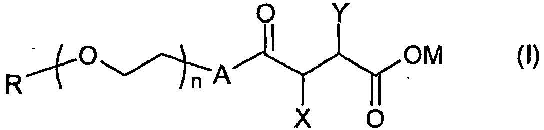 dans laquelle
R représente un radical hydrocarboné saturé ou insaturé, linéaire ou ramifié, aliphatique ou alicyclique, comprenant 6 à 18 atomes de carbone,
n vaut un nombre entier de 0 à 10,
A représente un atome d'oxygène ou un groupe difonctionnel de formule (II), 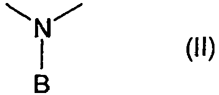
B représente un atome d'hydrogène ou un groupe de formule (III) 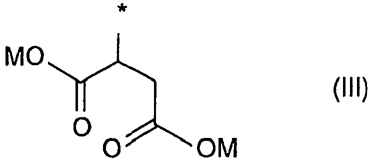 dont la liaison a lieu via la valence **caractérisée par** *,
X et Y sont choisis parmi les groupes acide sulfonique sous forme acide ou de leur sel de sodium, de potassium et d'ammonium et des atomes d'hydrogène, Y représentant un atome d'hydrogène lorsque X représente un groupe acide sulfonique ou son sel et inversement, Y représentant un groupe acide sulfonique ou son sel lorsque X représente un atome d'hydrogène et
M représente un atome d'hydrogène ou un ion de sodium, de potassium ou d'ammonium,
et lorsque B représente un groupe fonctionnel de formule (III), n vaut 0 et M représente un atome de sodium,
(C) 0,01 à 12,0% en poids d'un tensioactif non ionique, qui est un éthoxylate d'éthanolamide d'acide gras de formule (VII), 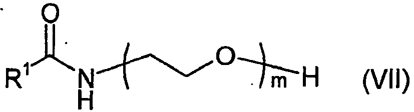 dans laquelle m vaut un nombre entier de 3 à 50 et R¹ représente C₇-C₂₁-alkyle ou C₇-C₂₁-alcényle,
(G) de l'eau.

2. Préparation aqueuse pigmentaire exempte de liant selon la revendication 1, dans laquelle le composant (B) est un semi-ester de l'acide sulfosuccinique de formule (IV) 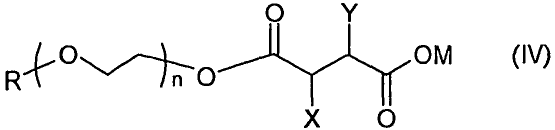 dans laquelle
R, n, X, Y et M présentent les significations indiquées dans la revendication 1.

3. Préparation aqueuse pigmentaire exempte de liant selon la revendication 1, dans laquelle le composant (B) est un alkylsulfosuccinamate de formule (V) 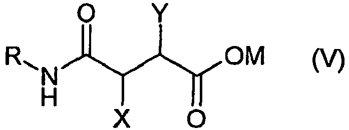 dans laquelle
R, X, Y et M présentent les significations indiquées dans la revendication 1.

4. Préparation aqueuse pigmentaire exempte de liant selon la revendication 1, dans laquelle le composant (B) est un amide de l'acide sulfosuccinique de formule (VI) 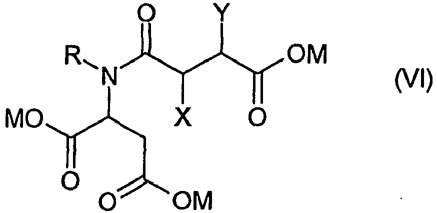 dans laquelle
R, X, Y et M présentent les significations indiquées dans la revendication 1.

5. Préparation aqueuse pigmentaire exempte de liant selon la revendication 1, contenant 1 à 12% en poids d'un éthoxylate d'alcanolamide d'acide gras de formule (VII).

6. Préparation aqueuse pigmentaire exempte de liant selon l'une ou plusieurs des revendications 1 à 5, contenant 1 à 8% en poids d'un composé de formule (I).

7. Préparation aqueuse pigmentaire exempte de liant selon l'une ou plusieurs des revendications 1 à 6, contenant 10 à 75% en poids d'eau.

8. Préparation aqueuse pigmentaire exempte de liant selon l'une ou plusieurs des revendications 1 à 7, qui présente une viscosité de 10 à 10.000 mPa.s, déterminée à l'aide d'un viscosimètre à cône-plaque à une vitesse de cisaillement de 1/60 sec⁻¹.

9. Préparations aqueuses pigmentaires exemptes de liant selon l'une ou plusieurs des revendications 1 à 8, contenant
(D) 0-8,0% en poids d'épaississant à base minérale argileuse, à base de minéraux de type silicate à couches de montmorillonite, naturels ou activés de manière alcaline.

10. Préparations aqueuses pigmentaires exemptes de liant selon l'une ou plusieurs des revendications 1 à 9, contenant
(E) 0-20,0% en poids de charges inorganiques.

11. Préparations aqueuses pigmentaires exemptes de liant selon l'une ou plusieurs des revendications 1 à 10, contenant
(F) 0 à 30% en poids d'autres adjuvants usuels pour la préparation de préparations aqueuses pigmentaires exemptes de liant, choisis parmi les agents mouillants, les agents de rétention de l'humidité, les solvants, les antimousses, les additifs de rhéologie, les conservateurs, les substances tampon et les régulateurs de pH.

12. Préparation aqueuse pigmentaire exempte de liant selon la revendication 11, contenant jusqu'à 15% en poids d'au moins un agent de rétention de l'humidité ou d'au moins un solvant, choisis parmi les glycoléthers présentant un poids moléculaire numérique moyen de 200 à 20.000 g/mole.

13. Préparation aqueuse pigmentaire exempte de liant selon la revendication 11 et/ou 12, contenant jusqu'à 2% en poids d'antimousse.

14. Préparation aqueuse pigmentaire exempte de liant selon l'une ou plusieurs des revendications 11 à 13, contenant jusqu'à 1% en poids d'un agent de conservation en pot.

15. Utilisation d'une préparation aqueuse pigmentaire exempte de liant selon l'une ou plusieurs des revendications 1 à 14 pour la coloration de matériaux macromoléculaires, de matériaux de revêtement, de laques et de peintures et leur utilisation pour l'impression de structures planes bidimensionnelles.
